# EUROPÄISCHE PATENTSCHRIFT

(11) **EP 0 381 016 B1**
(45) Veröffentlichungstag und Bekanntmachung des Hinweises auf die Patenterteilung: **07.09.1994**
(21) Anmeldenummer: 90101289.8
(22) Anmeldetag: 23.01.1990
(51) Int. Cl.: B60R 1/12, G01S 13/93, H01Q 1/32

(54) **Aussenspiegel für ein Kraftfahrzeug**
External rear view mirror for a motor vehicle
Rétroviseur extérieur pour véhicule

(30) Priorität: 01.02.1989 DE 3902852
(43) Veröffentlichungstag der Anmeldung: 08.08.1990
(73) Patentinhaber: HOHE KG, D-97903 Collenberg (DE)
(72) Erfinder: Fürst, Peter, D-8768 Bürgstadt (DE)
(74) Vertreter: Zinngrebe, Horst, Dr.rer.nat.

(56) Entgegenhaltungen:
- WO-A-85/01114
- DE-A- 2 024 413
- DE-A- 3 313 866
- FR-A- 2 107 881
- GB-A- 2 004 418
- SE-B- 454 393
- US-A- 3 683 379
- US-A- 4 028 662
- PATENT ABSTRACTS OF JAPAN vol. 8, no. 20 (M-271)(1457) 27 Januar 1984,& JP-A-58 180347 (NISSAN JIDOSHA K.K.) 21 Oktober 1983,

## Beschreibung

Die Erfindung betrifft einen Außenspiegel für ein Kraftfahrzeug mit einem Spiegelgehäuse, in welchem ein Rückspiegel gehalten und welches mittels eines Fußes am Fahrzeug befestigbar ist, wobei am Spiegelgehäuse ein Sendeempfänger für elektromagnetische Strahlung bestimmter Frequenz, dessen Antenne gegen die Fahrtrichtung des Kraftfahrzeuges gerichtet ist, befestigt ist, welchem eine Auswerteschaltung mit optischer und/oder akustischer Anzeigevorrichtung nachgeschaltet ist.

Aus WO-A-8 501 114 ist ein Außenspiegel für ein Kraftfahrzeug bekannt, in dessen Spiegelgehäuse im spiegelfußnahen Bereich ein Sender und ein Empfänger für elektromagnetische Strahlung angeordnet sind. Sender und Empfänger sind in den vom Fahrer des Fahrzeugs über den Außenrückblickspiegel nicht einsehbaren toten Winkel gerichtet. Erfaßt der Empfänger von einem im toten Winkel befindlichen Objekt reflektierte Strahlung, wird dies dem Fahrer über eine Anzeigevorrichtung mitgeteilt. Das Dokument WO-A-8 501 114 bildet den Oberbegriff des Patentanspruchs 1.

In FR-A-2 107 881 wird beschrieben, daß eine mit dem Auge des Fahrers nicht sichtbare Annäherung eines Fremdfahrzeugs durch Ausnützen des Dopplereffekts einer vom Fahrzeug emittierten Radar-Strahlung dem Fahrer zur Kenntnis gebracht werden kann.

Aus SE-B-454 393 geht hervor, daß der Sender in einem Ansatz am Spiegelgehäuse untergebracht werden kann, welcher an der fußfernen Schmalseite des Spiegelgehäuses vorgesehen ist.

In GB-A-2 004 418 ist ein Fahrzeug beschrieben, auf dessen Kotflügel ein pfostenartiger Fuß eines Spiegelgehäuses mit Rückblickspiegel befestigt ist. In dem hohlen Spiegelfuß ist ein Mikrowellensender untergebracht.

Demgegenüber sieht die Erfindung bei dem eingangs genannten Außenspiegel vor, daß die Auswerteschaltung in einem hohlen Teil eines Fußes befestigt und am unteren Eckbereich eines fußfernen Teils des Spiegelgehäuses ein gegen die Fahrtrichtung offener Ansatz nach unten vorstehend angeformt ist, in welchem der Sendeempfänger befestigt ist. Damit wird insbesondere erreicht, daß die seitliche Ausladung des Spiegelgehäuses durch den Ansatz nicht vergrößert wird.

Bevorzugte Ausgestaltung der Erfindung im übrigen sind in den Unteransprüchen angegeben.

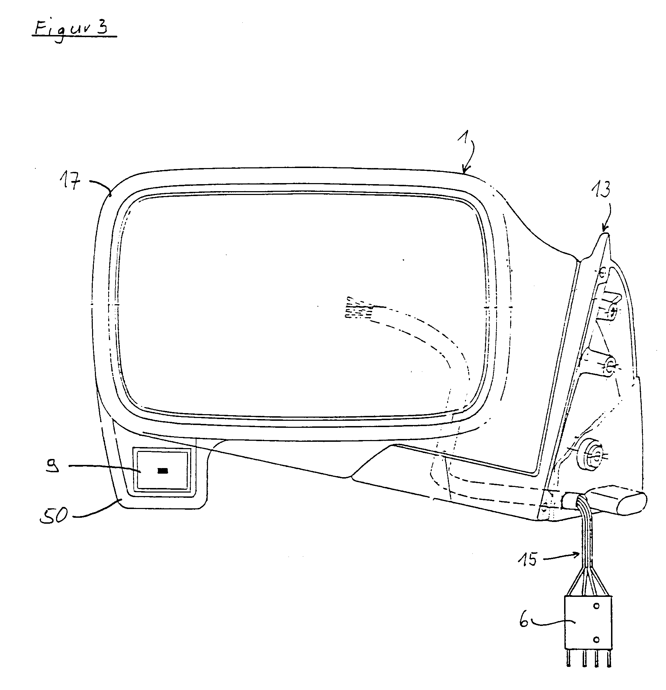

Die Erfindung wird nachstehend anhand des in der beigefügten Zeichnung dargestellen Ausführungsbeispiels (Fig. 3) beschrieben. Es zeigen:
- Fig. 1: eine Ansicht einer teilweise aufgebrochenen Ausführungsform eines Außenspiegels vom Rückspiegel her;
- Fig. 2: einen Querschnitt längs des der Linie B - B aus Fig. 1;
- Fig. 3: eine der Fig. 1 ähnliche Ansicht einer erfindungsgemäßen Ausführungsform eines Außenspiegels;
- Fig. 4: ein elektrisches Schaltbild eines Sendeempfängers mit Auswerteschaltung und Anzeigevorrichtung; und
- Fig. 5: eine Draufsicht auf die Frontseite des apparativen Teils des Sendeempfängers.

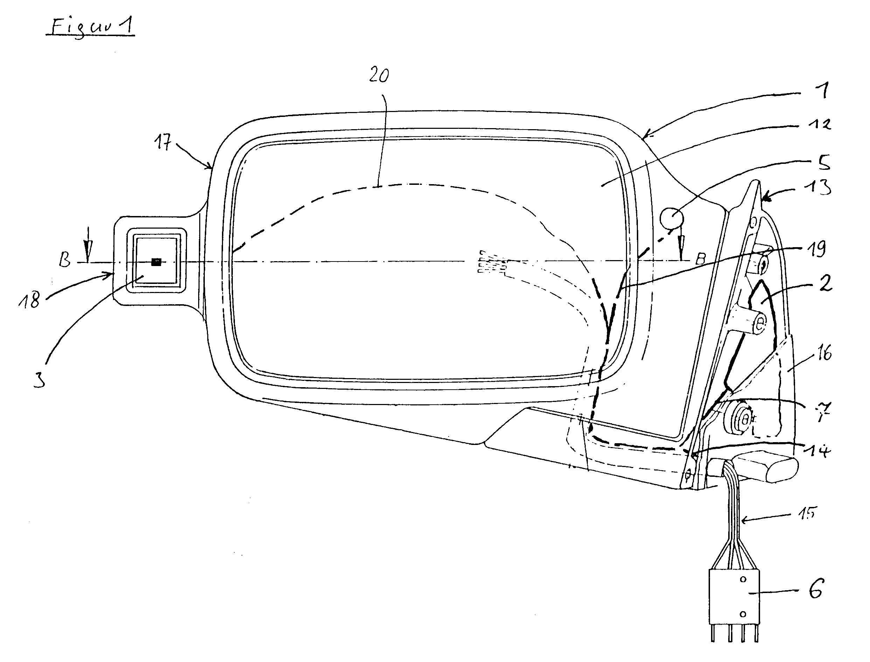

Der Außenspiegel nach Fig. 1 besitzt zunächst in üblicher Weise ein Spiegelgehäuse 1, welches an einen Spiegelfuß 13 in nicht dargestellter, jedoch bekannter Weise angelenkt ist. Mit dem Spiegelfuß 13 kann der Außenspiegel beispielsweise an die linke Fahrertür eines Personenkraftwagens wie bekannt anmontiert werden. Das Spiegelgehäuse 1 umschließt seitlich sowie in Fahrtrichtung einen Rückspiegel 12, der in der dargestellten Ausführungsform elektrisch in eine gewünschte Position innerhalb eines vorgegebenen Winkelbereichs verstellt werden kann. Dazu ist ein elektrisches Anschlußkabel 15 von der Rückseite des Rückspiegels 12 durch das Spiegelgehäuse, seine Anlenkung am Spiegelfuß 13 sowie durch den Spiegelfuß 13 in das Innere des Fahrzeugs geführt und kann dort mittels eines Steckers 6 an die im Fahrzeuginneren verlegten Leitungen angeschlossen werden. Der zur Fahrzeugkarosserie hin zunächst offene Innenraum des Spiegelfußes 13 ist mittels einer flexibelen Gummiplatte 16 zum Fahrzeug hin verschlossen, deren oberer Teil in Fig. 1 für die bessere Darstellung abgeschnitten ist.

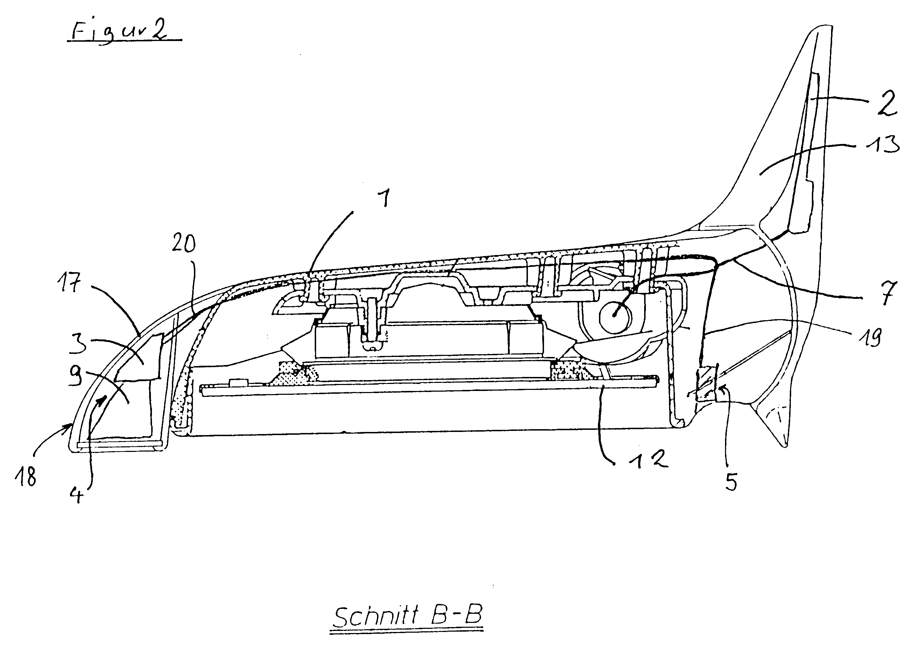

Bei der in den Fig. 1 und 2 dargestellten Ausführungsform ist an die spiegelfußferne Partie 17 des Spiegelgehäuses 1 ein gegen Fahrtrichtung offener, hohler Ansatz 18 angeformt, der mit dem Inneren des Spiegelgehäuses in Verbindung steht. In diesem Ansatz ist, wie Fig. 2 schematisch zeigt, das Gehäuse 3 eines Sendeempfängers 4 mit Antennentrichter 9 an den Gehäuse-Ösen 90, 91, 92, 93 (Fig. 5) befestigt.

In einer alternativen Ausführungsform kann statt des Ansatzes 18, der an der spiegelfußfernen Partie des Spiegelgehäuserandes ausgebildet ist, auch ein Ansatz 50 vorgesehen sein, der in dem spiegelfußfernen unteren Eckbereich des Spiegelgehäuses nach unten vorstehend ausgebildet ist. Im Inneren des Ansatzes 50 ist wieder das Gehäuse 3 mit Antennentrichter 9 des Sendeempfängers 4 befestigt. Diese Ausführungsform hat gegenüber der erstgenannten den Vorteil, daß die seitliche Ausladung des Spiegelgehäuses durch den Ansatz nicht vergrößert wird.

Im Inneren des hohlen Spiegelfußes 13 ist eine Auswerteschaltung 2 hermetisch versiegelt befestigt. Die für die Auswerteschaltung 2 erforderliche Platine mit zugehörigen elektrischen und elektronischen Bauteilen ist derart flach gehalten, daß sie über die Kontur des Spiegelfußes 13, insbesondere in Richtung auf die Fahrzeugkarosserie, nicht vorsteht. Das elektrische Anschlußkabel 15 enthält zusätzlich ein in Fig. 1 gestrichelt und in Fig. 2 ausgezogen dargestelltes Versorgungskabel 20 für den Sendeempfänger, von welchem im Spiegelfuß eine Zweigleitung 7 zur Auswerteschaltung sowie im Spiegelgehäuse eine Zweigleitung 19 zu einer Warnlampe 5 abzweigen. Die Warnlampe 5 ist im Spiegelgehäuse zwischen Rückspiegel 12 und Spiegelfuß 13 befestigt und durch eine Bohrung im Spiegelgehäuse von außen durch den Fahrer erkennbar.

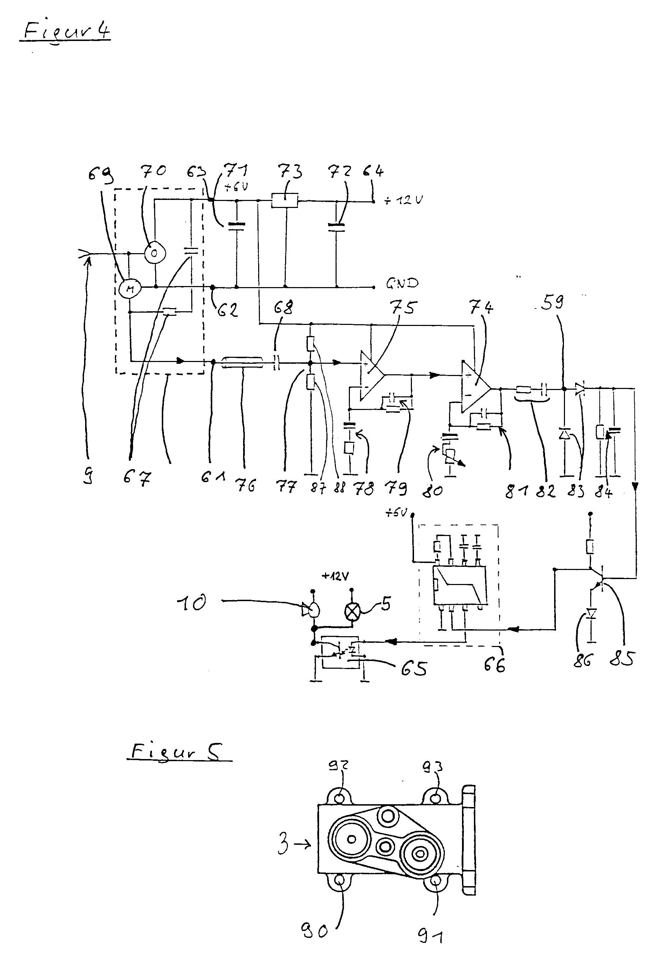

Gemäß der in Fig. 4 dargestellten Schaltung, in welcher die im Sendeempfänger 4 enthaltenen Bauteile gestrichelt umrahmt sind, wird an den Anschluß 64 eine gegenüber dem auf Masse gelegten Anschluß 62 eine Spannung vom +12 Volt beispielsweise aus der Fahrzeugbatterie gelegt. Aus dieser Spannung wird mittels des Kondensators 72 und des Spannungsstabilisators 73 eine schaltungsinterne Betriebsspannung von 6 Volt erzeugt, die durch den Glättungskondensator 71 weiter nachgeglättet wird. Diese schaltungsinterne Betriebsspannung von 6 Volt steht danach zwischen den Anschlüssen 63 und 62 des Sendeempfängers. Dessen Oszillator 70 schwingt mittels einer Gun-Diode auf einer Festfrequenz von beispielsweise 24,13 GHz, und emitiert eine elektromagnetische Welle dieser Frequenz mittels der Antenne 9 in einen Winkelbereich hinter dem Spiegelgehäuse 1, der dem toten Winkel entspricht. Befinden sich elektrisch leitfähige Gegenstände mit einer Relativbewegung zu dem am Fahrzeug festen Sendeempfänger 43 innerhalb des abgestrahlten Winkelbereichs, so wird die elektromagnetische Strahlung an deren Oberfläche mit einer Dopplerverschiebung der Frequenz der Strahlung reflektriert, wobei die Frequenzverschiebung proportional zur Relativgeschwindigkeit ist und bei 24,13 GHz Oszillatorfrequenz einen Betrag von 45 Hz/km/h aufweist.

Die Antenne 9 empfängt dieses dopplerverschobene Signal und leitet es einem Mischer 69 im Sendeempfänger 4 zu, der daraus die Differenzfrequenz zur Oszillatorfrequenz generiert, wobei die Amplitude erhalten bleibt. Durch das Reihen-RC-Glied 67 im Sendeempfänger 4, dessen Wechselspannungsimpedanz an die abgeschirmte Zuleitung 76 zum Anschlußpunkt 61 des Sendeempfängers 4 angepaßt ist, wird das Differenzfrequenzsignal dem Kondensator 68 über den Anschluß 61 und die Zuleitung 76 zugeführt, wobei der Kondensator 68 den Gleichspannungsanteil für die nachfolgende Schaltung sperrt.

Das gleichspannungsmäßig potentialfreie Differenzfrequenzsignal wird dem Verknüpfungspunkt 77 eines Spannungsteilers 87, 88 zugeführt, der zwischen die schaltungsinterne Betriebsspannung von 6 Volt an Anschluß 63 und Masse geschaltet ist. Das durch den Spannungsteiler 87, 88 auf ein geeignetes Bezugspotential für der Operationsverstärker 75 gebrachte Differenzfrequenzsignal wird dem positiven Eingang des Operationsverstärkers 75 zugeführt. Durch die komplexen Impedanzen innerhalb des Rückkopplungskreises des negativen Eingangs des Operationsverstärkers 75, die durch das Reihen-RC-Glied 78 und das Parallel-RC-Glied 79 gebildet werden, erhält die Übertragungsfunktion des Operationsverstärkers 75 eine Bandpaßcharakteristik mit einer unteren und einer oberen Grenzfrequenz.

Das zu erkennende Geschwindigkeitsintervall der Relativgeschwindigkeiten liegt gemäß der üblichen Erfahrung des Straßenverkehrs hauptsächlich zwischen 10 km/h und 75 km/h, woraus für die Bandpaßcharakteristik des Operationsverstärkers 75 eine untere Frequenz von 0,45 kHz und eine obere Grenzfrequenz von 3,38 kHz folgen. Andererseits ist es auch möglich, die untere Grenzfrequenz noch weiter herabzusetzen.

Es besteht ferner die Möglichkeit, die Frequenz des Empfangssignals mit derjenigen von der Geschwindigkeit des eigenen Fahrzeugs abhängigen dopplerverschobenen Frequenz zu vergleichen, die ein von einem ruhenden Objekt reflektiertes Empfangssignal haben würde, und bei Gleichheit der Frequenze das Empfangssignal von der Auswertung auszublenden.

Das Ausgangssignal des Operationsverstärkers 75 wird dem positiven Eingang eines weiteren Operationsverstärkers 74 zugeführt und in diesem verstärkt, wobei der Verstärkungsfaktor innerhalb des angegebenen Frequenzintervalls im wesentlichen durch das Verhältnis der Ohm'chen Widerstandswerte des Reihen-RC-Gliedes 80, sowie des Parallel-RC-Gliedes 81 definiert wird. Da der Ohm'che Widerstand des RC-Gliedes 80 als Potentiometer ausgebildet ist, kann der Verstärkungsfaktor durch Verstellen des Potentiometerabgriffs geändert bzw. angepaßt werden.

Zusatzlich bewirken die komplexen Impedanzen der RC-Glieder 80, 81 sowie das mit dem Ausgang des weiteren Operationsverstärkers 74 in Reihe geschaltete Reihen-RC-Glied 82 eine weitere Bandfilterung im Bezug auf den Spannungsbezugspunkt 59, die das Filterverhalten der Zusammenschaltung der beiden Operationsverstärker 74, 75 innerhalb der angegebenen Grenzfrequenzen weiter ausprägt und somit Störsignale weitgehend unterdrückt.

Hinter dem weiteren RC-Glied 82 wird das Nutzsignal einem Verknüpfungspunkt zweier Reihen-Dioden 83 zugeführt, welche das ankommende wechselfrequente Signal gleichrichten. Das weitere nachgeschaltete Parallel-RC-Glied 84 glättet das gleichgerichtete Signal, welches der Basis des Treibertransistors 85 zugeführt wird. Der Kollektor des Treibertansistors 85 liegt einerseits über einen Widerstand an einer Gleichstromquelle geeigneten Potentials und andererseits an einem Auslöse-Anschluß einer Zeitschaltung 66, deren Ausgangs-Anschluß mit einem Opto-Koppler 65 verbunden ist. Der Emitter des Treibertransistors 85 liegt über eine Diode 86 an Masse. Steigt daher das Potential an der Basis des Treibertransistors 85 über etwa 1,4 V, initialisiert er die im ganzen mit 66 bezeichnete Zeitschaltung, die im Stromversorgungspfad eines Summers 10 sowie der Warnlampe 5 liegt.

Die Höhe des an der Basis der Treibertransistors 85 anliegende Spannungssignals ist proportional zur Amplitude des Differenzfrequenzsignals und der Spannungsverstärkung des Operationsverstärkers 74. Da der Treibertransistor 85 für Basisspannungen unterhalb von 1,4 V im wesentlichen schließt, ist dadurch zusammen mit der Spannungsverstärkung des Operationsverstärkers 74 ein unterer Amplitudenwert für Differenzfrequenzsignale definiert, unterhalb dessen die Warnlampe 5 nicht aufleuchtet und die Zeitschaltung 66 nicht ausgelöst wird. Durch das Potentiometer im RC-Glied 80 läßt sich somit eine Empfindlichkeitsschwelle für die Amplitude der reflektierten Signale einstellen, unterhalb der keine Anzeige erfolgt. Diese Empfindlichkeitsschwelle ist durch geeignete Wahl der Widerstandswerte des Potentiometers im RC-Glied 80 dem reflektierten Signal von Kraftfahrzeugen innerhalb des toten Winkels anpaßbar. Das Potentiometer des RC-Gliedes kann separat im Inneren des Fahrzeugs an einer für den Fahrer zugänglichen Stelle eingebaut sein, so daß dem Fahrer das individuelle Anpassen der Empfindlichkeitsschwelle an die aktuelle Verkehrssituation möglich wird.

Weiterhin kann das Potentiometer des RC-Gliedes 80 in nichtdargestellter Weise auch durch mehrere Widerstände mit verschiedenden Widerstandswerten ersetzt werden, die durch einen Wechselschalter wahlweise in den Stromkreis eingeschaltet werden können und dadurch verschiedene Empfindlichkeitsstufen des Sendeempfängers 4 ermöglichen.

Durch die Zeitschaltung 66, die nach Auslösen den nachgeschalteten Opto-Koppler 65 zeitverzögert an eine Stromquelle von 6 Volt Spannung legt, wird für ein festeingestelltes Mindestzeitintervall der dem Opto-Koppler 65 nachgeschalteter Summer 10 sowie die Warnlampe 5 aktiviert, die daraufhin ein Warnsignal für den Fahrer abgeben. In einer speziellen Ausführungsform der Erfindung kann als Sendeempfänger ein von der Alpha Industries GmbH unter der Bezeichnung GOS 2780 in den Handel gebrachtes Gerät dienen. Die Erfindung ist jedoch auf die Verwendung dieses Gerätes nicht beschränkt sondern auch mit Sendeempfängern realisierbar, die mit Ultraschall oder Infrarot als elektromagnetische Strahlung arbeiten.

## Patentansprüche

1. Außenspiegel für ein Kraftfahrzeug mit einem Spiegelgehäuse (1), in welchem ein Rückspiegel (12) gehalten und welches mittels eines Fußes (13) am Fahrzeug befestigbar ist, wobei am Spiegelgehäuse (1) ein Sendeempfänger (4) für elektromagnetische Strahlung bestimmter Frequenz, dessen Antenne (9) gegen die Fahrtrichtung des Fahrzeugs gerichtet ist, befestigt ist, welchem eine Auswerteschaltung (2; Fig. 4) mit optischer und/oder akustischer Anzeigevorrichtung (5, 10) nachgeschaltet ist, dadurch gekennzeichnet, daß die Auswerteschaltung (2) in einem hohlen Teil des Fußes (13) befestigt und am unteren Eckbereich eines fußfernen Teils (17) des Spiegelgehäuses (1) ein gegen die Fahrtrichtung offener Ansatz (50) nach unten vorstehend angeformt ist, in welchem der Sendeempfänger befestigt ist.

2. Außenspiegel nach Anspruch 1, dadurch gekennzeichnet, daß die optische Anzeigevorrichtung (5) in einem fußnahen Teil des Spiegelgehäuses neben dem Rückspiegel (12) im Blickwinkel des Fahrers befestigt ist.

3. Außenspiegel nach Anspruch 1 oder 2, dadurch gekennzeichnet, daß die optische und/oder akustische Anzeigevorrichtung im Inneren des Fahrzeugs, insbesondere am Armaturenbrett befestigt ist.

4. Außenspiegel nach einem der vorstehenden Ansprüche, dadurch gekennzeichnet, daß die Anzeigevorrichtung eine Warnlampe (5) aufweist.

5. Außenspiegel nach einem der vorstehenden Ansprüche, dadurch gekennzeichnet, daß die Anzeigevorrichtung einen Summer (10) aufweist.

## Claims

1. An exterior mirror for a motor vehicle having a mirror casing (1), in which a rear view mirror (12) is held and which is fixable to the vehicle by means of a foot (13), wherein a transceiver (4) for electromagnetic radiation of a certain frequency, the antenna (9) of which is directed against the direction of travel of the vehicle, is fixed to the mirror casing (1), said transceiver (4) being connected in series to an analysis circuit (2; figure 4) with a visual and/or acoustic indicator device (5, 10), characterised in that the analysis circuit (2) is fixed in a hollow portion of the foot (13) and a projection, open against the direction of travel, in which the transceiver is fixed, is moulded, projecting downwards, onto the lower corner region of a portion (17) away from the foot of the mirror casing (1).

2. An exterior mirror according to claim 1, characterised in that the visual indicator device (5) is fixed in the driver's angle of vision in a portion near the foot of the mirror casing, next to the rear view mirror (12).

3. An exterior mirror according to claim 1 or 2, characterised in that the visual and/or acoustic indicator device is fixed on the inside of the vehicle, particularly on the dashboard.

4. An exterior mirror according to one of the preceding claims, characterised in that the indicator device has a warning lamp (5).

5. An exterior mirror according to one of the preceding claims, characterised in that the indicator device has a buzzer (10).

## Revendications

1. Rétroviseur extérieur pour un véhicule avec un corps de rétroviseur (1), dans lequel un miroir (12) est maintenu et qui peut être fixé sur le véhicule au moyen d'un pied (13), un émetteur-récepteur (4) pour rayonnement électromagnétique de fréquence déterminée, dont l'antenne (9) est orientée à l'opposé de la direction de déplacement du véhicule étant fixé sur le corps de rétroviseur, en aval duquel est monté un circuit d'évaluation (2 ; Fig. 4) avec dispositif de signalisation (5, 10) optique et/ou acoustique, caractérisé en ce que le circuit d'évaluation (2) est fixé dans une partie creuse du pied (13), et dans la zone de coin inférieure d'une partie éloignée de pied (17) du corps de rétroviseur (1) une embase (50) ouverte à l'opposé de la direction de déplacement est ménagée en saillie vers le bas, dans laquelle l'émetteur-récepteur est fixé.

2. Rétroviseur extérieur selon la revendication 1, caractérisé en ce que le dispositif de signalisation optique (5) est fixé dans une partie proche du pied du corps de rétroviseur près du miroir (12) dans l'angle de vision du conducteur.

3. Rétroviseur extérieur selon la revendication 1 ou 2, caractérisé en ce que le dispositif de signalisation optique et/ou acoustique est fixé à l'intérieur du véhicule, en particulier sur le tableau de bord.

4. Rétroviseur extérieur selon l'une des revendications précédentes, caractérisé en ce que le dispositif de signalisation présente une lampe témoin (5).

5. Rétroviseur extérieur selon l'une des revendications précédentes, caractérisé en ce que le dispositif de signalisation présente un buzzer (10).
